# EUROPÄISCHE PATENTSCHRIFT

(11) **EP 1 036 621 B1**
(45) Veröffentlichungstag und Bekanntmachung des Hinweises auf die Patenterteilung: **23.07.2003**
(21) Anmeldenummer: 00103754.8
(22) Anmeldetag: 23.02.2000
(51) Int. Cl.: B23D 31/00

(54) **Verfahren zum Bruchtrennen eines Bauteiles in zwischen Bauteilbegrenzungen und einer Durchbrechung vorgesehen Querschnitten, insbesondere einer geteilten Lageranordnung**
Method for fracturing connecting rods and the like
Procédé pour couper des bielles par rupture

(30) Priorität: 16.03.1999 DE 19911598
(43) Veröffentlichungstag der Anmeldung: 20.09.2000
(73) Patentinhaber: Bayerische Motoren Werke Aktiengesellschaft, 80809 München (DE)
(72) Erfinder: Luchner, Clemens, 85598 Baldham (DE); Kröhn, Günter, 4400 Steyr (AT)

(56) Entgegenhaltungen:
- EP-A- 0 985 479
- EP-A- 1 002 609
- WO-A-95/26257

## Beschreibung

Die Erfindung bezieht sich auf ein Verfahren zum Bruchtrennen eines Bauteiles in zwischen Bauteilbegrenzungen und einer Durchbrechung vorgesehenen Querschnitten, insbesondere einer geteilten Lageranordnung, wobei vor dem Bruchtrennen in Teilbereichen der Bruchtrenn-Querschnitte die Bruchfestigkeit des Bauteiles gezielt durch eine geometrische und/oder technologische Kerbstelle verringert wird, und ferner am Innenumfang der Durchbrechung über zumindest ein am abzutrennenden Bauteilabschnitt in Anlage bringbares Element eine orthogonal zu den Bruchtrenn-Querschnitten wirkende Bruchkraft eingeleitet wird, wobei der abzutrennende Bauteilabschnitt mittels außerhalb der Durchbrechung an der äußeren Kontur des Bauteilabschnittes einwirkende Kräfte gestützt wird.

Ein derartiges Verfahren ist aus der WO 95 26257 A bekannt, wobei die Abstützung des abzutrennenden Bauteiles bzw. des Lagerdeckels dazu dient, dass während des Bruchtrenn-Vorganges durch zeitlich unterschiedlich eintretende Bruchvorgänge in den Bruchtrenn-Querschnitten keine Rotation des Bauteiles bzw. des Lagerdeckels eintritt, womit sich in nachteiliger Weise nicht fügbare Bruchtrennflächen ergeben würden.

Weiter ist aus der DE 44 13 255 A1 eine Vorrichtung zum Bruchtrennen eines Bauteiles bekannt, die z.B. zwei in die Durchbrechung eines Bauteiles einsetzbare, auseinandertreibbare Halbdome umfaßt, die gegenüber dem Durchmesser der Durchbrechung um ein vorbestimmtes Maß kleiner gewählt sind. Diese Maßnahme ist größenmäßig so gewählt, daß das Bauteil beim Bruchtrennen bezüglich seiner Verformung im elastischen Bereich verbleibt, wobei diese gezielt gesteuerte elastische Verformung der Unterstützung der Brucheinleitung in den vorgesehenen Kerbstellen dient.

Wie aus Versuchen erkennbar, können die zu trennenden Bauteilabschnitte aufgrund unterschiedlicher geometrischer Gestaltung ein unterschiedliches elastisches Verhalten zeigen mit dem Nachteil, daß die tatsächlichen Bruchtrennflächen gegenüber der gewünschten Richtung der Bruchtrennflächen winkelmäßig abweichen.

Der Erfindung liegt die Aufgabe zugrunde, ein gattungsgemäßes Verfahren zum Bruchtrennen eines Bauteiles mit unterschiedlichen Festigkeiten bzw. elastischem Verhalten in den zu trennenden Bauteilabschnitten zur Erzielung einer einwandfreien Bruchtrennung ohne die vorgenannten Nachteile weiterzubilden.

Diese Aufgabe ist mit dem Patentanspruch 1 gelöst.

Mit der Erfindung von außen auf den abzutrennenden Bauteilabschnitt einwirkenden Stützkräften bzw. äußerer Stützkräfte ist in vorteilhafter Weise z.B. ein biegeweicher Lagerdeckel von einem steifen Lagerstuhl eines Maschinengehäuses einwandfrei bruchzutrennen, wobei zur Schraubenachse geneigte Bruchtrennflächen vermieden sind und damit eine Schädigung der Bruchtrennflächen durch Schubspannungen aus Verschraubungskräften unterbleibt. Weiter ist durch das Fehlen der vorgenannten Schubkräfte die runde Form der Durchbrechung im verschraubten Zustand vorteilhaft gewährleistet, wobei auch durch wiederholtes Verschrauben auftretende Setzerscheinungen unterbleiben.

Mit dieser erfindungsgemäßen Ausgestaltung des Verfahrens ist ein Sprung im elastischen Verhalten der Durchbrechung diesseits und jenseits einer jeweiligen Kerbstelle mit Sicherheit vermieden, womit ein zu vorgesehenen Verschraubungen orthogonal gerichteter Verlauf von Bruchtrennflächen einwandfrei erzielt ist.

Weitere Anwendungen und Ausgestaltungen der Erfindung sind in zusätzlichen Ansprüchen beschrieben.

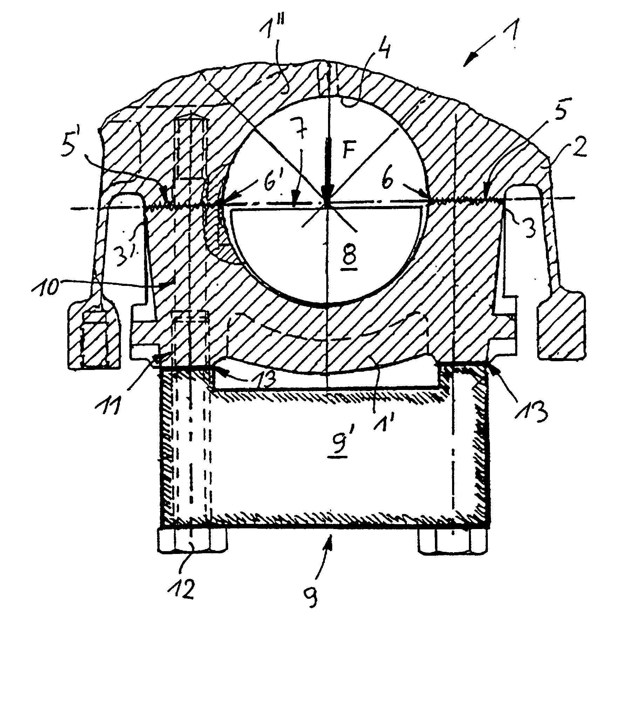

Die Erfindung ist anhand einer in der Zeichnung beispielhaft dargestellten Lageranordnung in einem Maschinengehäuse einer Hubkolbenmaschine beschrieben.

Zum Bruchtrennen einer Lageranordnung 1 z.B. in einem Maschinengehäuse 2 einer nicht näher aufgezeigten Hubkolbenmaschine in zwischen Bauteilbegrenzungen 3, 3' und einer Durchbrechung 4 vorgesehenen Querschnitten 5, 5' wird verfahrensmäßig vor dem Bruchtrennen in Teilbereichen der Bruchtrenn-Querschnitte 5, 5' die Bruchfestigkeit der Lageranordnung 1 gezielt durch eine geometrische und/oder technologische Kerbstelle 6, 6' verringert.

Ferner wird gemäß dem Bruchtrenn-Verfahren am Innenumfang der Durchbrechung 4 der geteilt auszubildenden Lageranordnung 1 über zumindest ein am abzutrennenden Lagerdeckel 1' in Anlage bringbares Element 7, z.B. in Form eines Halbdornes 8 eine orthogonal zu den Bruchtrenn-Querschnitten 5, 5' wirkende Bruchkraft "F" eingeleitet, wobei mittels einer durch die Halbkreis-Kontur von gegenüber der Durchbrechung 4 kleineren Abmessungen des Halbdomes 8 gesteuert vorbestimmten elastischen Verformung der Lageranordnung 1 im Bereich der Kerbstellen 6, 6' die Bruchauslösung unterstützt wird.

Wie aus der einzigen Zeichnung ersichtlich, umfaßt die Lageranordnung 1 beispielsweise für eine Kurbelwelle nach dem Gießen des Maschinengehäuses 2 einen Lagerdeckel 1', der mit einem im Maschinengehäuse 2 integrierten Lagerstuhl 1" in einstückiger Verbindung steht. Aufgrund der integralen Einbindung des Lagerstuhles 1" in das Maschinengehäuse 2 unterliegt der Lagerstuhl 1" beim Bruchtrennen des Lagerdeckels 1' von diesem einer relativ geringen elastischen Verformung. Demgegenüber unterliegt der vom Lagerstuhl 1" freie abstehende Lagerdeckel 1' beim Bruchtrennen einer wesentlich stärkeren elastischen Verformung. Somit ergeben sich beim Bruchtrennen beiderseits der Kerbstellen 6 und 6' unterschiedliche elastische Verformungen, die eine ungünstige Rißlenkung beim Bruchtrennen bewirken.

Zur Behebung dieses Nachteiles ohne Berücksichtigung des jeweils für das Bruchtrennen verwendete Element 7 wird das Bruchtrenn-Verfahren erfindungsgemäß dadurch weitergebildet, daß bei einem abzutrennenden Bauteilabschnitt bzw. Lagerdeckel 1' von relativ großer Biegeweichheit die elastische Verformung durch außerhalb der Durchbrechung 4 an der äußeren Kontur des Bauteilabschnittes bzw. Lagerdeckels 1' einwirkend angeordnete Stützkräfte begrenzt wird.

Im Gegensatz zu den mit der Vorrichtung gemäß der weiter vorne genannten DE 44 13 255 A1 erzielten Stützkräfte dienen bei dem erfindungsgemäßen Verfahren von außen aufgebrachte Stützkräfte einer gesteuerten Verformung des bruchzutrennenden Bauteiles, wobei die erfindungsgemäß von außen einwirkend angeordneten Stützkräfte in vorteilhaft einfacher Weise dadurch erzielt sind, daß der abzutrennende Bauteilabschnitt bzw. der Lagerdeckel 1' mittels einer lösbar angeordneten Versteifungseinrichtung 9 entsprechend biegesteif gestaltet wird. Vorzugsweise wird die Versteifungseinrichtung 9 derart gestaltet, daß diese zusammen mit dem Lagerdeckel 1' in etwa der Biegesteifigkeit des am Maschinengehäuse 2 verbleibenden Lagerstuhles 1" entspricht.

Eine im Aufbau einfache und in der Handhabung günstige Versteifungseinrichtung 9 ist weiter dadurch erzielt, daß bei einem mit der Lageranordnung 1 verschraubbaren Lagerdeckel 1' in dessen Schrauben-Durchgangsbohrungen 10 jeweils ein Gewinde 11 für Schraubbolzen 12 vorgesehen wird, mittels denen der Lagerdeckel 1' durch eine lösbare Anordnung der als biegesteifes Flachstück 9' ausgebildeten Versteifungseinrichtung 9 unter Auflage auf den freien Schrauben-Pfeifenenden 13 des Lagerdeckels 1' zum Bruchtrennen versteift wird.

Die zur Einleitung äußerer Stützkräfte in den biegeweichen Lagerdeckel 1' dienende, brückenartige Versteifungseinrichtung 9 ist in vorteilhafter Weise auch für eine automatisch gesteuerte Fertigung geeignet. Weiter können diese Versteifungseinrichtungen 9 für mehrere Lageranordnungen 1 miteinander zu einem steifen Rahmen verbunden sein.

## Patentansprüche

1. Verfahren zum Bruchtrennen eines Bauteiles in zwischen Bauteilbegrenzungen und einer Durchbrechung vorgesehenen Querschnitten, insbesondere einer geteilten Lageranordnung,
- wobei vor dem Bruchtrennen in Teilbereichen der Bruchtrenn-Querschnitt(5,5') die Bruchfestigkeit des Bauteiles (1) gezielt durch eine geometrische und/oder technologische Kerbstelle (6,6') verringert wird, und
- ferner am Innenumfang der Durchbrechung (4) über zumindest ein am abzutrennenden Bauteilabschnitt ( 1') in Anlage bringbares Element (7) eine orthogonal zu den Bruchtrenn-Querschnitten (5,5') wirkende Bruchkraft einwirkt, wobei
- der abzutrennende Bauteilabschnitt (1') mittels außerhalb der Durchbrechung (4) an der äußeren Kontur des Bauteilabschnittes (1') einwirkende Kräfte gestützt wird,
**dadurch gekennzeichnet,**
- **dass** die Bruchauslösung mittels einer über die Kontur und/oder Anordnung des Elementes ( 7 bzw. 8) gesteuert vorbestimmten elastischen Verformung des Bauteiles (1) im Bereich der Kerbstellen (6,6') unterstützt wird, wobei
- die elastische Verformung des abzutrennenden Bauteilabschnittes (1') mit relativ großer Biegeweichheit durch eine biegesteife Gestaltung des abzutrennenden Bauteilabschnittes (1') mittels einer an diesem Bauteilabschnitt (1') lösbar angeordneten Versteifungseinrichtung (9) begrenzt wird.

2. Verfahren nach Anspruch 1, **gekennzeichnet durch** die Verwendung zum Bruchtrennen eines Lagerdeckels (1') einer Lageranordnung (1) eines Pleuels und/oder eines Maschinengehäuses (2) einer Hubkolbenmaschine.

3. Verfahren nach Anspruch 2, **dadurch gekennzeichnet,**
- **daß** bei einem mit der Lageranordnung (1) verschraubbaren Lagerdeckel (1') in dessen Schrauben-Durchgangsbohrungen (10) jeweils ein Gewinde (11) für Schraubbolzen (12) vorgesehen wird, mittels denen
- der Lagerdeckel (1') durch eine lösbare Anordnung der als biegesteifes Flachstück (9') ausgebildeten Versteifungseinrichtung (9) unter Auflage auf den freien Schrauben-Pfeifenenden (13) des Lagerdeckels (1') zum Bruchtrennen versteift wird.

## Claims

1. A method of fracturing a component, especially a divided bearing arrangement, at cross-sections situated between an aperture and boundaries of the component,
- wherein the breaking strength of the component (1) is deliberately reduced by a geometrical and/or technological notch (6, 6') over parts of the fracture cross-section (5, 5') before the fracturing operation, and
- a breaking force acting at right angles to the fracture cross-sections (5, 5') is exerted on the inner periphery of the aperture (4) via at least one element (7) for bringing against a portion (1') of the component for breaking off wherein
- the portion (1') for breaking off is braced by forces acting on the outer contour of the portion (1') outside the aperture (4),
**characterised in that**
- initiation of the fracture is assisted by preset elastic deformation of the component (1) in the region of the notches (6, 6'), controlled via the contour and/or arrangement of the element (7 or 8), wherein
- the elastic deformation of the portion (1') for breaking off, the portion bending relatively easily, is limited by stiffening the portion (1') via a stiffening means (9) releaseably disposed on the said portion (1').

2. A method according to claim 1, **characterised by** use for fracturing a bearing cover (1') of a bearing arrangement (1) of a connecting rod and/or a reciprocating engine casing (2).

3. A method according to claim 2, **characterised in that**
- in the case of a bearing cover (1') for screwing to the bearing arrangement (1), a thread (11) for screwthreaded bolts (12) is provided in each screw passage bore (10) in the said cover, whereby
- the bearing cover (1') is stiffened for the purpose of fracturing by a releasable arrangement of the thickening means (9), in the form of a rigid flat member (9'), resting on the free ends (13) of the screw holes in the bearing cover (1').

## Revendications

1. Procédé pour la coupure par rupture d'une pièce dans des sections prévues entre des limites de pièces et une ouverture, en particulier pour un palier divisé, selon lequel
- avant la coupure par rupture, la résistance à la rupture de la pièce (1) est volontairement réduite avant la coupure par rupture dans des régions partielles de la section (5, 5') de la coupure par rupture, par une zone d'encochage géométrique et/ou technologique (6, 6'), et
- en supplément, une force de rupture agissant orthogonalement aux sections de coupure par rupture (5, 5') agit sur la périphérie intérieure de l'ouverture (4) par l'intermédiaire d'au moins un élément (7) qui peut être mis en appui contre le segment de pièce (1') qu'il s'agit de séparer,
- le segment de pièce (1') qu'il s'agit de séparer étant soutenu au moyen de forces agissant à l'extérieur de l'ouverture (4) sur le contour extérieur du segment (1') de la pièce,
**caractérisé en ce que**
- le déclenchement de la rupture est amélioré au moyen d'une déformation élastique de la pièce (1) dans la région des zones d'encochage (6, 6') qui est prédéterminée de façon commandée en agissant sur le contour et/ou sur la disposition de l'élément (7 ou 8), en même temps que
- la déformation élastique du segment de pièce (1') qu'il s'agit de séparer et qui possède une souplesse de flexion relativement grande est limitée en donnant une constitution rigide à la flexion au segment de pièce (1') qu'il s'agit de séparer, au moyen d'un dispositif raidisseur (9) disposé de façon détachable sur ce segment (1') de la pièce.

2. Procédé selon la revendication 1,
**caractérisé par**
l'utilisation pour la coupure par rupture d'un chapeau de palier (1'), d'un palier (1'), d'une bielle et/ou d'un carter (2) d'un moteur à pistons alternatifs.

3. Procédé selon la revendication 2,
**caractérisé en ce que**
- dans le cas d'un chapeau de palier (1') qui peut être boulonné à un palier (1), il est prévu dans des perçages traversants de boulons (10) de ce chapeau respectivement des filetages (11) pour des boulons (12) au moyen desquels
- le chapeau de palier (1') est raidi, en vue de la coupure par rupture par une disposition détachable du dispositif raidisseur (9) constitué par une pièce plate (9') rigide à la flexion, avec appui sur les extrémités de boulonnage libres en sifflet (13) du chapeau de palier (1').
